# EUROPEAN PATENT APPLICATION

(11) **EP 2 526 843 A1**
(43) Date of publication of application: **28.11.2012**
(21) Application number: 11186014.4
(22) Date of filing: 20.10.2011
(51) Int. Cl.: A47J 36/08

(54) **Multifunctional double-glazed pot lid**

(30) Priority: 23.05.2011 CN 201120165371 U; 25.08.2011 US 217894
(71) Applicant: Hong Guang Tempered Glass Ind. Co., Ltd., Jingmen, Guangdong 529100 (CN)
(72) Inventor: Dai, Jie, 529100 Jiangmen Guangdong (CN)
(74) Representative: Dunlop, Hugh Christopher

(57) **Abstract**

The present invention discloses a multifunctional double-glazed pot lid, comprising a pot lid body (10) and a lid surface, wherein the lid surface is provided as a double-layer structure having an external layer glass lid surface (20) and an internal layer glass lid surface (30) and is connected to the pot lid body by a metal overlapping (11). The stainless steel overlapping of the present invention can be designed into a plurality of shapes, and the lid edge designed correspondingly to the stepping shape can cover two pots with different diameters, thereby having a multifunctional feature; a circle of silica gel (40) is filled in the gap between each layer glass lid surface and stainless steel overlapping for sealing; the design of double-glazed lid surface is excellent in heat preservation effect, difficult to send out vapor, environmentally-friendly, energy-saving and can prevent hands from being scalded; a plurality of circles of holes (12) which are designed at the periphery of the lid body facilitate water pouring.

## Description

### Field of Technology

The present invention relates to a cooker, in particular to a multifunctional double-glazed pot lid.

### Background

In the modem industrial field, various pots appear. The pots have various shapes and various lids, and play an irreplaceable role in different environments, respectively. The main effect of the pot lid is to maintain the temperature of material in the pot, and the pot lid plays a role in preventing liquid from splashing and in preventing vapor from escape due to the factor that the material in the pot is heated and the like.

However, most of lids for rice cookers or woks are in a single-layer structure made of aluminum material or stainless steel material. In the process of cooking, stir-frying or stewing, a large amount of hot vapor sends out from the pot lid mouth, or the surface of the pot lid accumulates heat and scalds hands of people. The common single-layer pot lid wastes thermal energy because the heat vapor ejects from the edge of the pot lid, and scalds hands of people easily. Therefore, the common single-layer pot lid has disadvantages in use.

### Summary of the Invention

To overcome the defects of the common single-layer pot lid in use, the objective of the present invention is to provide a multifunctional double-glazed pot lid with a novel structure. The lid has an excellent heat preservation effect, improves utilization rate of thermal energy and can prevent hands of people from being scalded. The lid is very practical.

The objective of the present invention and the solution of solving technical problem are realized by adopting the following technical scheme. A multifunctional double-glazed pot lid with a novel structure provided by the present invention comprises a pot lid body and a lid surface. The lid surface is provided as a double-layer structure having an external layer glass lid surface and an internal layer glass lid surface and is connected to the pot lid body by a metal overlapping.

The metal overlapping between the external layer glass lid surface and the internal layer glass lid surface forms an internal edge capable of covering the pot body.

The metal overlapping on the external layer glass lid surface is provided with an external edge of external layer lid surface capable of covering the pot body with a large diameter.

The metal overlapping between the external layer glass lid surface and the internal layer glass lid surface forms a stepping edge capable of covering two pot bodies with different diameters.

The external layer glass lid surface and the internal layer glass lid surface are united with the metal overlapping respectively in a sealing manner by filling a circle of silica gel.

The left side surface of the pot lid body is provided with a plurality of double-layer through holes, the right side surface of the pot lid body is provided with a plurality of triple-layer through holes.

The metal overlapping is a stainless steel overlapping and can also be an aluminum alloy overlapping or iron overlapping.

By the above technical scheme, the beneficial effect of the multifunctional double-glazed pot lid provided by the present invention is that the stainless steel overlapping of the present invention can be designed into a plurality of shapes, and the lid edge designed correspondingly to the stepping shape can cover two pots with different diameters, thereby having a multifunctional feature; a circle of silica gel is filled in the gap between each layer glass lid surface and the stainless steel overlapping for sealing; the design of double-glazed lid surface is excellent in heat preservation effect, difficult to send out vapor, environmentally-friendly, energy-saving and can prevent hands from being scalded; a plurality of circles of holes which are designed at the periphery of the lid body facilitate water pouring.

### Brief Description of the Drawings

Fig. 1 is a cross-section diagram of a multifunctional double-glazed pot lid of the present invention;
Fig. 2A is the local view of the pot lid body along direction A in Fig. 1; Fig. 2B is the local view of the pot lid body along direction B in Fig. 1;
Fig. 3 is a cross-section diagram of another embodiment of the present invention;
Fig. 4 is a cross-section diagram of a further embodiment of the present invention
   10: pot lid body
   11: metal overlapping
   111: internal edge
   112: external edge of the external layer lid surface
   113: external edge of the internal layer lid surface
   12: through hole
   13: through hole
   20: external layer glass lid surface
   30: internal layer glass lid surface
   40: silica gel

### Detailed Description

The structure features and functions of the present invention can be realized by the following embodiments, but the present invention is not limited to the following embodiments.

### Embodiment 1

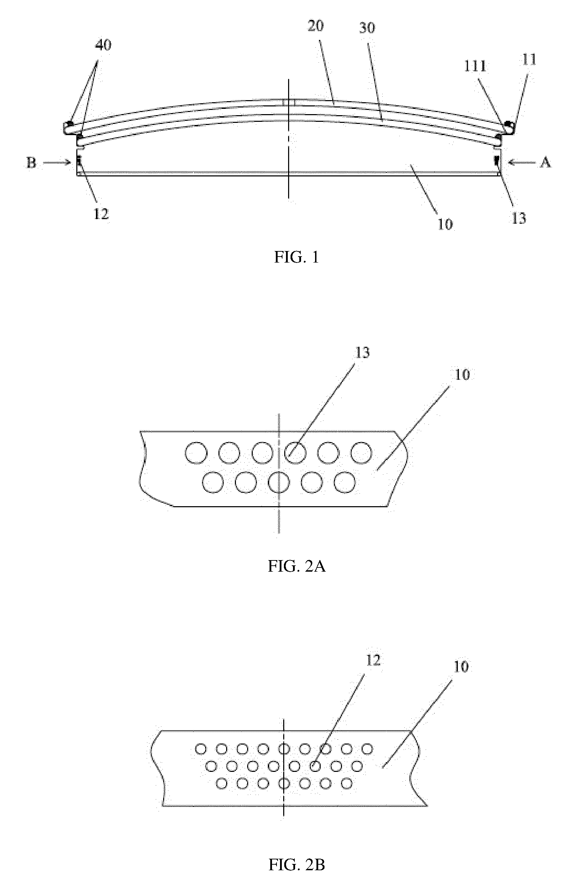

As shown in Fig. 1, the multifunctional double-glazed pot lid of the present invention comprises a pot lid body 10 and a lid surface. The lid surface is provided as a double-layer structure having an external layer glass lid surface 20 and an internal layer glass lid surface 30 and is connected to the pot lid body 10 by a metal overlapping 11. The metal overlapping 11 between the external layer glass lid surface 20 and the internal layer glass lid surface 30 forms an internal edge 111 capable of covering the pot body. The metal overlapping 11 is mainly designed into a stainless steel overlapping and can also be an aluminum alloy overlapping or iron overlapping. The external layer glass lid surface 20 and the internal layer glass lid surface 30 are united with the metal overlapping 11 respectively in a sealing manner by filling a circle of silica gel 40. The design of the double-glazed lid surface can realize the environmentally friendly, heat preserving and energy-saving effect.

As shown in Fig. 2A and Fig. 2B, the left side surface below the pot lid body 10 is provided with a plurality of double-layer through holes 12; and the right side surface of the pot lid body 10 is provided with a plurality of triple-layer through holes 13. The through holes and the pot lid body are connected and well integrated, which can be used for covering pasta pots and can facilitate water pouring from the through holes.

### Embodiment 2

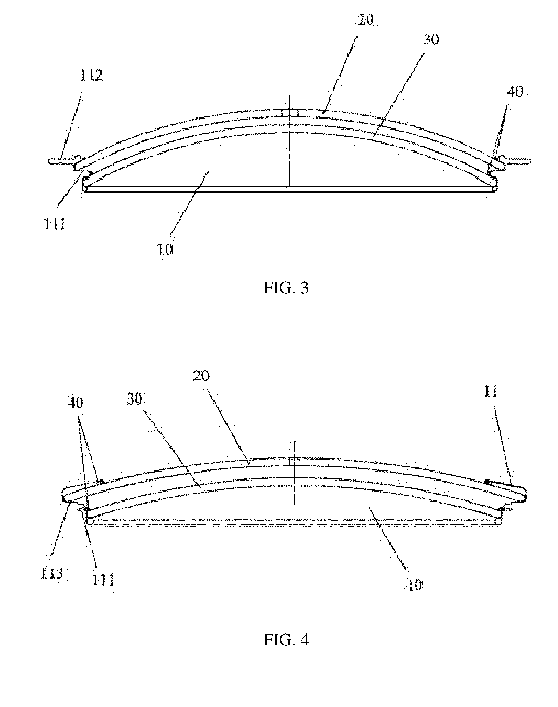

As shown in Fig. 3, the multifunctional double-glazed pot lid of another embodiment of the present invention uses a design in which the double-glazed lid surface is united to the pot lid body 10 by the stainless steel metal overlapping, which is the same as embodiment 1. The external layer glass lid surface 20 and the internal layer glass lid surface 30 are united with the metal overlapping 11 respectively in a sealing manner by filling a circle of silica gel 40. The difference compared with embodiment 1 lies in that no through holes are provided in the lower side surface of the pot lid body. And the metal overlapping on the external layer glass lid surface 20 is provided with an external edge 112 of external layer lid surface capable of covering the pot body with a large diameter. The external edge 112 of external layer lid surface is capable of covering another pot body with a large diameter, which realizes the multifunctional features.

### Embodiment 3

Fig. 4 is a multifunctional double-glazed pot lid of the present invention corresponding to a further embodiment. What is the same as embodiment 2 is that the multifunctional double-glazed pot lid of a further embodiment of the present invention uses a design in which the double-glazed lid surface is united to the pot lid body 10 by the stainless steel metal overlapping, and no through holes are provided in the lower side surface of the pot lid body; the external layer glass lid surface 20 and the internal layer glass lid surface 30 are united with the metal overlapping 11 respectively in a sealing manner by filling a circle of silica gel 40. The difference compared with embodiment 2 lies in that the metal overlapping between the external layer glass lid surface 20 and the internal layer glass lid surface 30 forms a stepping edge capable of covering two pot bodies with different diameters. The metal overlapping on the internal layer glass lid surface 30 is provided with an external edge 113 of the internal layer lid surface capable of covering the pot body with a small diameter.

The above are only the preferred embodiments of the present invention and do not intend to limit the present invention in any form, so any simple modifications, equivalent changes and improvements of the above embodiments in accordance with the technical essence of the present invention without departing from the content of the technical scheme of the present invention shall fall within the scope of the technical scheme of the present invention.

## Claims

1. A multifunctional double-glazed pot lid, comprising a pot lid body and a lid surface, wherein the lid surface is provided as a double-layer structure having an external layer glass lid surface and an internal layer glass lid surface and is connected to the pot lid body by a metal overlapping.

2. The multifunctional double-glazed pot lid according to claim 1, wherein the metal overlapping between the external layer glass lid surface and the internal layer glass lid surface forms an internal edge capable of covering the pot body.

3. The multifunctional double-glazed pot lid according to claim 2, wherein the metal overlapping on the external layer glass lid surface is provided with an external edge of external layer lid surface capable of covering the pot body with a large diameter.

4. The multifunctional double-glazed pot lid according to claim 1, wherein the metal overlapping between the external layer glass lid surface and the internal layer glass lid surface forms a stepping edge capable of covering two pot bodies with different diameters.

5. The multifunctional double-glazed pot lid according to any of claims 1 to 4, wherein the external layer glass lid surface and the internal layer glass lid surface are united with the metal overlapping respectively in a sealing manner by filling a circle of silica gel.

6. The multifunctional double-glazed pot lid according to claim 5, wherein the left side surface of the pot lid body is provided with a plurality of double-layer through holes, the right side surface of the pot lid body is provided with a plurality of triple-layer through holes.

7. The multifunctional double-glazed pot lid according to claim 5, wherein the metal overlapping is a stainless steel overlapping and can also be an aluminum alloy overlapping or iron overlapping.
